# EUROPEAN PATENT SPECIFICATION

(11) **EP 3 103 709 B1**
(45) Date of publication and mention of the grant of the patent: **08.08.2018**
(21) Application number: 15171808.7
(22) Date of filing: 12.06.2015
(51) Int. Cl.: B62D 57/024

(54) **STRUCTURE ADAPTABLE MOVING DEVICE**
STRUKTURANPASSBARE BEWEGLICHE VORRICHTUNG
DISPOSITIF DE DEPLACEMENT ADAPTABLE

(43) Date of publication of application: 14.12.2016
(73) Proprietor: Ansaldo Energia IP UK Limited, London W1G 9DQ (GB)
(72) Inventor: Carrasco, Edgar, 4142 Münchenstein (CH)
(74) Representative: Studio Torta S.p.A.

(56) References cited:
- EP-A1- 2 138 379
- US-A1- 2010 147 430

## Description

### BACKGROUND

### Field of Endeavor

The present disclosure relates generally to moving devices or robotic vehicles and, more particularly, to a structure adaptable moving device for an environment, including, but not limited to, with changing geometries, which may be utilized, but not limited to, in applications, such as, inspection, transportation, and in repairing activities.

### Brief Description of the Related Art

Robotic vehicles have been successfully utilized in various applications, such as inspection and the like.

For example, US2010/147430 dislcoses an apparatus that is capable of omni-directional movement and includes a belt layer made of a plurality of interlocking flexible rings and a surface layer made of a laterally inelastic and longitudinally flexible material that surrounds the exterior of the belt layer. The device has a bladder located in the interior of the belt layer that provides structural support for the belt layer and surface layer and a hub that is in contact with the surface layer and is connected to an axle. Longitudinal motion occurs as the bladder, the belt layer, the surface layer, and the hub rotate together. Lateral motion occurs as the belt layer and the surface layer rotate around the bladder. Longitudinal motion is induced by a plurality of electromagnetic curvilinear motor drive rings that are located around the hub and are in contact with the surface layer.

In spite of all of that, it has always been challenge to accelerate such vehicles in varying environments. Conventional robotic vehicles may have the capability of accommodating various movements making it suitable of desired purposes on in a non-varying environment.

However, it has always been a challenge for such vehicles to be adaptable to such an environment with continuously changing geometries. Accordingly, there exists a need for moving devices which precludes the foregoing disadvantages.

### SUMMARY

The present disclosure discloses a structure adaptable moving device that will be presented in the following simplified summary to provide a basic understanding of one or more aspects of the disclosure that are intended to overcome the discussed drawbacks, but to include all advantages thereof, along with providing some additional advantages. This summary is not an extensive overview of the disclosure. It is intended to neither identify key or critical elements of the disclosure, nor to delineate the scope of the present disclosure. Rather, the sole purpose of this summary is to present some concepts of the disclosure, its aspects and advantages in a simplified form as a prelude to the more detailed description that is presented hereinafter.

A general object of the present disclosure is to provide the structure adaptable moving device for an environment, including, but not limited to, with changing geometries, which may be utilized, but not limited to, in applications, such as, inspection etc.

Accordingly, the present disclosure relates to a structure adaptable moving device (herein after will be referred to as 'device') as claimed in claim 1.

In one embodiment, the drive member is capable of enabling differential movement of the flexible ring by selectively driving the one or more drive motor of one section of the flexible ring so as to steer said section of the flexible ring, while restricting the drive motor of another section of the flexible ring so as to restrict the said another section thereof simultaneously, thereby enabling the differential movement of the device. In further embodiment, the one or more drive member is capable of enabling one of vertical, horizontal, back and forth, side by side movements of the flexible ring by selectively choosing the movement thereof to omnidirectionally move the flexible ring. In one embodiment, the drive members may be one of motorized Mecanum wheels, omnidirectional motorized wheels, spherical motors, omnidirectional treading mechanisms and the like.

The device may further include one or more biasing members configured on the at least one flexible ring so as to enable the flexible ring to be flexibly and stretchably moved omnidirectionally in the environment via the drive members. In one embodiment, the biasing members may be helical spring type.

In one embodiment, the device may further include at least a power source configured in coordination with the flexible ring to power the device to be moved in the environment. Further, the device may include electronic modules configured in coordination with the flexible ring to facilitate operating of the device in the environment. Such electronic modules may, for example, be sensing member, visualizing member, Light Emitting Diodes to facilitate operating the device in the environment.

In another embodiment, the device includes a centralized arrangement for enabling biasing effect of the flexible ring. The centralized driving arrangement may include a central elongated body disposed centrally to the flexible ring; and a plurality of spring elements extending between the central elongated body and an inner portion of the flexible ring to enable the flexible ring to be flexibly and stretchably moved omnidirectionally in the environment.

In such embodiment, in one form, the plurality of the spring elements may be adapted to be arranged in at least two rows on the central elongated body such that the plurality of spring elements arranged in contrary direction to the plurality of spring elements enabling the flexible ring to be flexibly and stretchably moved. Further, in another form, the central elongated body is adapted to split vertically in at least two parts, each configuring one row of plurality of spring elements, wherein relative shifting between the two parts with the two rows of spring elements enables the flexible ring to be flexibly and stretchably moved as per the environment. In such embodiment, the spring elements may be a flexible spring sheet type.

In further embodiment, the plurality of the spring elements is adapted to be arranged along the central elongated body in at least two rows enabling the flexible ring to be flexibly and stretchably moved. In an example, the plurality of spring elements may be a cylindrical spring type or a sinusoidal spring type.

Further, as per the said above embodiments, the device may further include at least a power source configured on the central elongated body to power the device to be moved in the environment. Furthermore, the electronic modules are configured on the central elongated body to facilitate operating of the device in the environment. For example, the electronic modules may be at least one of sensing member, Visualizing member, Light Emitting Diodes (LED) to facilitate operating the device in the environment.

These together with the other aspects of the present disclosure, along with the various features of novelty that characterize the present disclosure, are pointed out with particularity in the present disclosure. For a better understanding of the present disclosure, its operating advantages, and its uses, reference should be made to the accompanying drawings and descriptive matter in which there are illustrated exemplary embodiments of the present disclosure.

### BRIEF DESCRIPTION OF THE DRAWINGS

The advantages and features of the present disclosure will better understood with reference to the following detailed description and claims taken in conjunction with the accompanying drawing, wherein like elements are identified with like symbols, and in which:
FIGS. 1A and 1B, respectively, depict a solid and a sketch structure adaptable moving device (herein after referred to as 'device'), wherein FIG. 1B illustrates an example depiction of the device with a biasing member, in accordance with embodiment of the present disclosure;
FIGS. 2A-2E depict a device with a centralized driving arrangement for biasing effect of the flexible ring, in accordance with one embodiment of the present disclosure;
FIGS. 3A-3C depict a device with a centralized driving arrangement for biasing effect of the flexible ring, in accordance with another embodiment of the present disclosure;
FIGS. 4A-4C depict a device with a centralized driving arrangement for biasing effect of the flexible ring, in accordance with yet another embodiment of the present disclosure; and
FIGS. 5A-5D, 6A-6B, 7A-7B, 8A-8C and 9A-9C illustrate various example environments with changing geometries or linear geometries where the device of FIGS. 1A to 4C may be utilized for purposes, such as, inspection, transport or repair.

Like reference numerals refer to like parts throughout the description of several views of the drawings.

### DETAILED DESCRIPTION OF EXEMPLARY EMBODIMENTS

For a thorough understanding of the present disclosure, reference is to be made to the following detailed description, including the appended claims, in connection with the above-described drawings. In the following description, for purposes of explanation, numerous specific details are set forth in order to provide a thorough understanding of the present disclosure. It will be apparent, however, to one skilled in the art that the present disclosure can be practiced without these specific details without departing from the scope of the invention as defined by the appended claims. In other instances, structures and devices are shown in block diagrams form only, in order to avoid obscuring the disclosure. Reference in this specification to "one embodiment," "an embodiment," "another embodiment," "various embodiments," means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but may not be of other embodiment's requirement.

Although the following description contains many specifics for the purposes of illustration, anyone skilled in the art will appreciate that many variations and/or alterations to these details are within the scope of the present invention as defined by the appended claims. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present invention as defined by the appended claims. Further, the relative terms used herein do not denote any order, elevation or importance, but rather are used to distinguish one element from another. Further, the terms "a," "an," and "plurality" herein do not denote a limitation of quantity, but rather denote the presence of at least one of the referenced item.

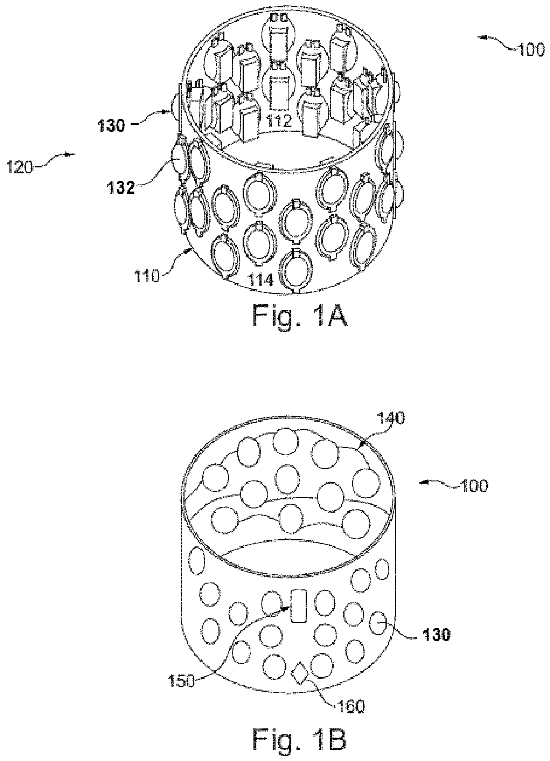

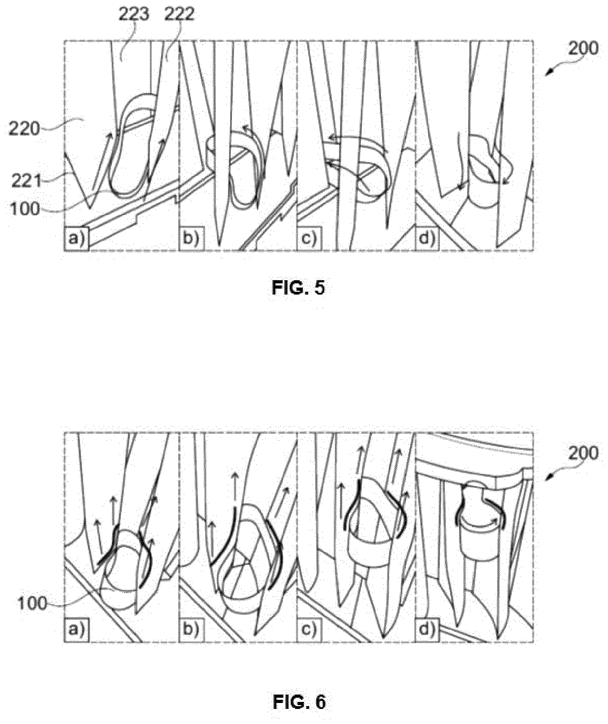

Referring to FIGS. 1A to 4C, various embodiments of structure adaptable moving devices 100 (hereinafter referred to as 'device 100') are depicted in accordance with various exemplary embodiment of the present disclosure. The device 100 may be utilized in an environment, including, but not limited to, with changing geometries, such as shown in FIGS.5A-5D, 6A-6B, 7A-7B, 8A-8C and 9A-9C, for application including, but not limited to, inspection, transportation and repair thereof.

The device 100 is capable of being maneuvered omnidirectionally and will be described with reference to FIGS. 1A-1B and FIGS. 2A-2B, FIGS. 3A-3E and FIGS. 4A-4C.

In an example, as shown in FIGS. 1A and 1B, the device 100 may include at least one flexible ring 110 and one or more driving mechanism 120. The flexible ring 110 may be adaptable to the changing geometries of the environment. In one form, the flexible ring 110 may be a flat circular ring type structure made of rubber, plastic and the like. Such ring 110 may include an inner circumferential side 112 and an outer circumferential side 114 thereof. Further, the driving mechanism 120 is configured to on the flexible ring 110 and capable of omnidirectionally moving the flexible ring 100 in the environment with the changing geometries.

As shown in FIGS. 1A and 1B, the driving mechanism 120 is one or more drive members 130 configured on the flexible ring 110. The drive members 130 is adapted to extend from an inner circumferential side 112 to an outer circumferential side 114 of the flexible ring 110 such that a part 132 of the drive members 130 extending from the outer circumferential side 114 coordinates with the changing geometries of the environment to omnidirectionally move the device 100.

In one embodiment, the one or more drive members 130 are capable of enabling differential movement of the flexible ring 100. For doing so, the one or more drive motor 130 of one section of the flexible ring 100 may be selectively driven so as to steer said section of the flexible ring 100, while restricting the one or more drive motors 130 of another section of the flexible ring 100 so as to restrict the said another section thereof simultaneously, thereby enabling the differential movement of the device 100.

In one embodiment, the one or more drive member 130 is capable of enabling one of vertical, horizontal, back and forth, side by side movements of the flexible ring 100 by selectively choosing the movement thereof to omnidirectionally move the flexible ring 100.

In one embodiment, the drive members 130 is one of motorized Mecanum wheels, omnidirectional motorized wheels, spherical motors, omnidirectional treading mechanisms and the like.

Further, in one embodiment, as specifically shown in FIG. 1B, the device may include one or more biasing arrangement 140. As per this embodiment, the biasing arrangement may be configured on the at least one flexible ring 110 so as to enable the flexible ring 110 to be flexibly and stretchably moved omnidirectionally in the environment via the drive members 130. As per this embodiment, the biasing members 140 may be a helical spring type.

Further, in one embodiment, the device 100, as shown in FIG. 1B may include various other supporting modules for enabling proper operation of the device. For example, the device 100 may include at least a power source 150, such as battery, configured on the flexible ring 110 to power the device 100 to be moved in the environment. Furthermore, the device 100 may also include various electronic modules 160 configured on the flexible ring 110. Such electronic modules may, for example, be sensing member, visualizing member, Light Emitting Diodes to facilitate operating the device 100 in the environment.

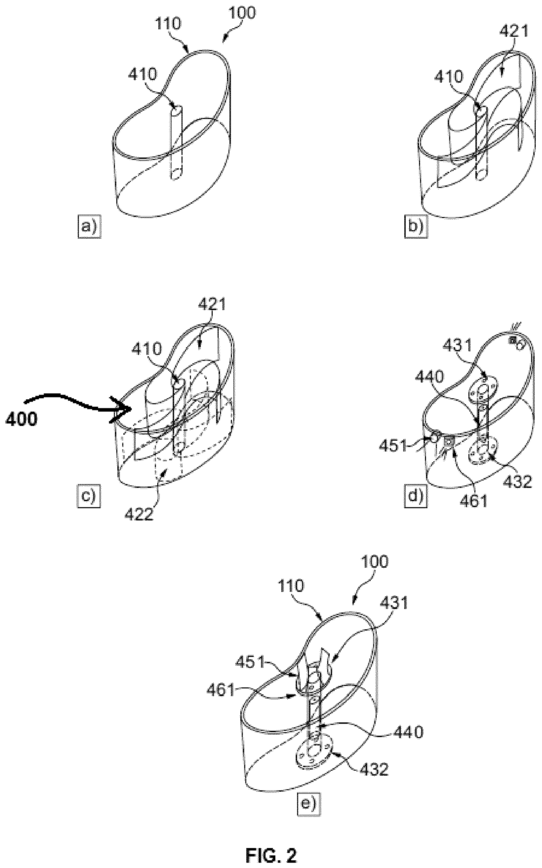

In another embodiment, as shown in FIGS. 2A to 4C, the device 100 with the driving mechanism 120, as described above, that may include a centralized arrangement 400, 500 for enabling biasing effect of the flexible ring 110 are illustrated, wherein it is disposed centrally to the flexible ring 110, as against in embodiments described above with respect to FIGS. 1A and 1B, where the biasing member 140 is shown to be disposed on the flexible ring 110. In FIGS. 2A to 4C, the flexible ring 110 is not shown to include the drive member 120 only for the sake of clarity to understand the invention, however, the drive member 120 is incorporated in similar manner as shown in FIGS. 1A, in all the embodiment as per FIGS. 2A to 4C.

In an example embodiment, as shown in respective FIGS. 2A-2E, 3A-3C and 4A-4C, the centralized arrangement 400, 500 may include a central elongated body 410, 510 and a plurality of spring elements 421, 422, 520, 522. The central elongated body 410, 510 may be disposed centrally to the flexible ring 110. Further, the spring elements 421, 422, 520, 522 extends between the central elongated body 410 and the inner circumferential side 112 of the flexible ring 110 to enable the flexible ring 110 to be flexibly and stretchably moved omnidirectionally in the environment.

Specifically, as shown in FIGS. 2A-2E, the plurality of the spring elements 421, 422 is adapted to be arranged in at least two rows and the spring elements 421 arranged in contrary direction to the spring elements 422 to flexibly and stretchably move the flexible ring 100 as per the environment. In one embodiment, the central elongated body 410 is adapted to split vertically in at least two parts 410a, 410b, each configuring one row of spring elements 421, 422. The two parts 410a, 410b with the two rows of spring elements 421, 422 may enable relative shifting in order to adapt in fast manner the ring's flexibility for an operation. The shifting between the two parts 410a, 410b may be adapted once and fixed for a certain operation. In one embodiment, the spring elements 421, 422, as shown in FIGS, 2A-3E, may be flexible spring sheet types.

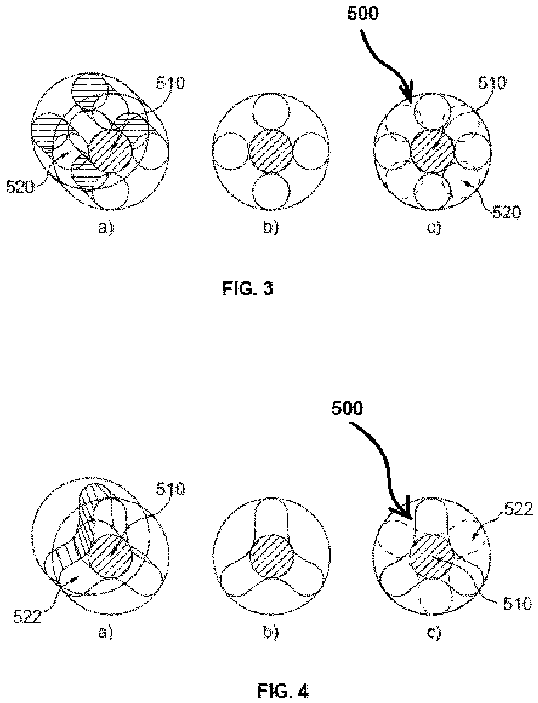

Further as specifically, as shown in FIGS. 3A-3C and 4A-4C, the spring elements 520, 522 may be arranged along the central elongated body 510 and within the flexible ring 110 in at least two rows. The spring elements 520, 522 extend from the central elongated body 510 to up to the inner circumferential side 112 of the flexible ring 110. The spring elements 520, as shown in FIGS. 3A-3C may be cylindrical spring type. Specifically, FIG. 3A illustrates perspective view, and FIG. 3B illustrates top view of the device 100 with four cylindrical spring type 520 along with the central elongated body 510. FIG. 3C illustrates top view of the device 100 with eight cylindrical spring type 520 along with the central elongated body 510.

Further, the spring elements 522, as shown in FIGS. 4A-4C, may be sinusoidal spring type. Specifically, FIG. 4A illustrates perspective view and FIG. 4B illustrates top view of the device 100 with one cylindrical spring type 522 along with the central elongated body 510. FIG. 4C illustrates top view of the device 100 with two cylindrical spring type 520 along with the central elongated body 510. However, without departing from the scope of the present disclosure, any number of the spring may be configured and shall be considered to be limiting to the described number only.

Further, as per the said above embodiment of FIGS. 2A-4C, the device 100 may include at least a power source 440 configured on the central elongated body 410, 510 to power the device 100 to be moved in the environment. Furthermore, the device 100 may also include electronic modules 431, 432 configured on the central elongated body 410, 510 to facilitate operating of the device 100 in the environment. The electronic modules 431, 432, for example, may be at least one of one controlling unit (Microcontroller), sensing member, visualizing member, Light Emitting Diodes (LED) or any other electronic device to facilitate operating the device 100 in the environment. Further, related power and signal lines (not shown) of the electronic components may be configured, embedded or attached in the flexible rings 110.

Referring now to FIGS. 5A-5D, 6A-6D, 7A-7B, 8A-8C and 9A-9C where the environment with irregular or changing geometries, such as, a turbine with various turbine stages formed by blades/vanes, hereinafter referred to as 'turbine environment 200,' is illustrated in which the device 100 may be utilized. The turbine environment 200 may include irregular or changing geometries 220 in the form of various stages (as depicted as rows 221) obtained by the arrangement of the blades/vanes 222. Herein reference of FIGS. 1A to 4C will be taken to describe the said figures.

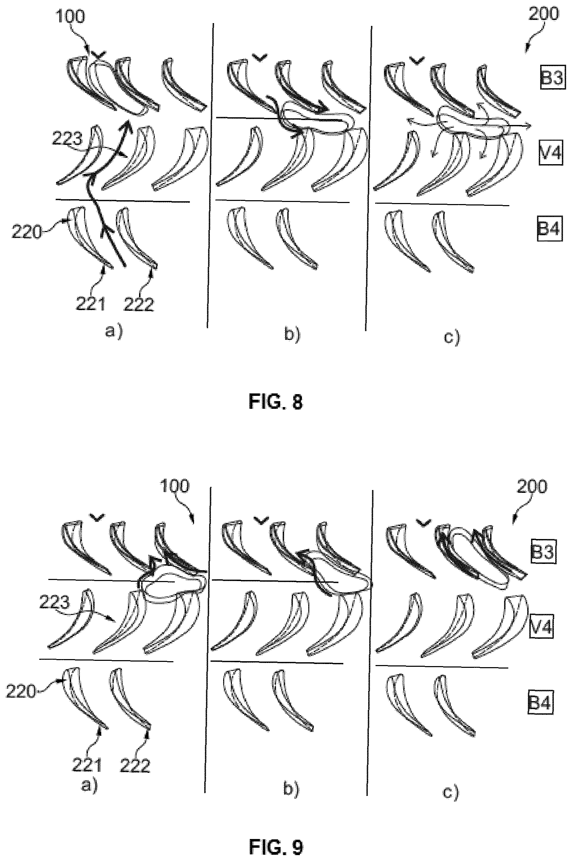

As shown in FIGS. 5A-5D and 8A-8C initially the device 100 may be inserted between the space 223 defined by two adjacent rows 221 of the blades/vanes 222 of the turbine environment 200, as shown in FIGS. 5A and 8A (bottom left where the long arrow starts). The insertion of the device 100, as shown by arrows, may be done by an operator or via the drive member 120 of the device 100. FIGS. 5B and 10B, respectively, show (by arrows) the movement of the device 100 towards the space 223, and once the device 100 has reached row of blade B3 after entering the turbine. By moving one side and restricting another side of the flexible ring 100, the device 100 may perform a differential movement, thereby steering a part of the device 100 into free path of the space 223 between the rows 221 of blades/vanes 222.

Once the device 100 is clamped between the rows 221, the part of the flexible ring surface 114 that touches any of the blade/vane 222 may be used to drive the device 100 deeper in the space 223, as shown in FIG. 5C. Furthermore, by displacing the flexible ring 110 further in the indicated direction (shown by arrows), the device 100 may move to subsequent row, as shown in FIG. 5D. The last position of the device 100 may be used as the starting point for a longitudinal root-to-tip or tip-to-root movements along the blades/vanes 222. Similarly, FIGS. 9A-9C also depicts the movement of the device 100.

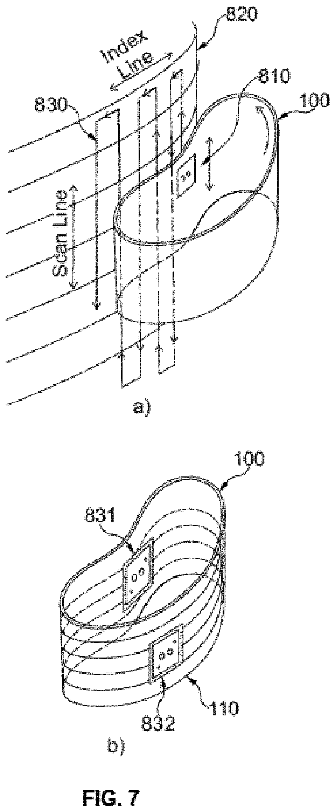

The device 100 may be slide-up or slide-down along the blades/vanes 222 for a longitudinal root-to-tip or tip-to-root movement along the blades/vanes 222, as shown in FIGS. 6A-6D and 7A The device 100 may be moved from tip-to-root of the blade/vane 222 by sliding on the surface of the blades/vanes 222 (shown by arrows). The differential or synchronized displacement characteristic of the flexible ring 110 allows the device 100 to rotate around the central axis thereof to define a new line of scanning and to maintain sensors/cameras 831, 832 on a straight line while displacing from tip-to-root or vice versa.

Such rotation or twist can also be used to reposition the sensor/cameras in the index axis to start a new line scan. The twist or rotation along the central axis may be done in 360°. This allows the device 100 to scan once a convex side and then scan the concave side of the adjacent blade, if necessary by performing 180° turn. During this movement, the device 100 remains in the radial clearance space of the turbine stage. Specifically, FIGS. 6A-6C depict that the device 100 by making contact along two sides of the blades/vanes 222, the sliding thereof in vertical direction may be carried out. Further, FIG. 6D depicts that once the device 100 is reached at the root or tip of the blade/vane 222; the twist movement around the central axis of the device 100 may be performed by reposition the contact surfaces of the flexible ring 110 relatively to the blades/vanes 222. Similarly, FIGS. 7A-7B shows sensors probes 810, 831, 832 integrated in the flexible ring 110 along with other component as described above. Using the sensor probes free surface 820, such as blade, vanes or any other component may be inspected along the scanning line 830, up and down.

The device 100 of the present disclosure is advantageous in various scopes such as described above. The device is omnidirectional and may be capable moving in all the possible direction on a surface to which it is adapted to be moved. The device may be used in an environment with changing geometries for including, but not limited to, applications, such as, inspection, transportation and repairing.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above teaching. The embodiments were chosen and described in order to best explain the principles of the present disclosure and its practical application, to thereby enable others skilled in the art to best utilize the present disclosure and various embodiments with various modifications as are suited to the particular use contemplated. It is understood that various omission and substitutions of equivalents are contemplated as circumstance may suggest or render expedient, but such are intended to cover the application or implementation without departing from the scope of the claims of the present disclosure.

### REFERENCE NUMERAL LIST

- 100: Device
- 110: Flexible ring
- 112, 114: Inner, outer circumferential sides
- 120: Driving mechanism
- 130: Drive member
- 132: Part of drive member
- 140: Biasing members
- 150: Power source
- 160: Electronic module
- 200: Turbine environment
- 220: Geometries
- 221: Rows, stages
- 222: Blades/vanes
- 223: Space
- 400, 500: Centralized arrangement
- 410, 510: Central elongated body
- 421, 422, 520, 522: Spring elements
- 410a, 410b: Parts of Centralized arrangement
- 440: Power source
- 431, 432: Electronic module
- 810, 831, 832: Sensors probes
- 820: Free surface
- 830: Scanning line

## Claims

1. A structure adaptable moving device (100) for an environment, including but not limited to, with changing geometries, the device (100), comprising:
at least one flexible ring (110) adaptable to the changing geometries of the environment; and
at least one driving mechanism (120) configured to the flexible ring (110) to omnidirectional move the flexible ring (100) in the environment with the changing geometries; the device being **characterized in that** the driving mechanism (120) is at least one drive member (130) which is configured on the flexible ring (110) and extends from an inner circumferential side (112) to an outer circumferential side (114) of the flexible ring (110) such that a part (132) of the drive member (130) extending from the outer circumferential side (114) coordinates with the changing geometries of the environment to omnidirectionally move the device (100).

2. The device (100) as claimed in claim 1, wherein the drive member (130) is capable of enabling differential movement of the flexible ring (100) by selectively driving the drive motor (130) of one section of the flexible ring (100) so as to steer said section of the flexible ring (100) while restricting the drive motor (130) of one section of the flexible ring (100) so as to restrict the said other section thereof simultaneously, thereby enabling the differential movement of the device (100).

3. The device (100) as claimed in claim 1, wherein the one or more drive member (130) is capable of enabling one of vertical, horizontal, back and forth, side by side movements of the flexible ring (100) by selectively choosing the movement thereof to omnidirectionally move the flexible ring (100).

4. The device (100) as claimed in claim 1, wherein the drive members (130) is one of motorized Mecanum wheels, omnidirectional motorized wheels, spherical motors, omnidirectional treading mechanisms and the like.

5. The device (100) as claimed in claim 1, further comprising one or more biasing arrangement (140) configured on the at least one flexible ring (110) so as to enable the flexible ring (110) to be flexibly and stretchably moved omnidirectionally in the environment via the drive members (130).

6. The device (100) as claimed in claim 5, wherein the biasing members (140) is a helical spring type.

7. The device (100) as claimed in claim 1, further comprising a centralised arrangement (400), (500) for biasing effect of the flexible ring (110), the centralised driving arrangement (400), (500) comprising:
a central elongated body (410), (510) disposed centrally to the flexible ring (110); and
a plurality of spring elements (421), (422), (520), (522) extending between the central elongated body (410) and an inner circumferential portion of the flexible ring (110) to enable the flexible ring (110) to be flexibly and stretchably moved omnidirectionally in the environment.

8. The device (100) as claimed in claim 7, wherein the plurality of the spring elements (421), (422) is adapted to be arranged in at least two rows on the central elongated body (410) such that the plurality of spring elements (421) arranged in contrary direction to the plurality of spring elements (422) enabling the flexible ring (100) to be flexibly and stretchably moved.

9. The device (100) as claimed in claim 8, wherein the central elongated body (410) is adapted to split vertically in at least two parts (410a), (410b), each configuring one row of plurality of spring elements (421), (422), wherein relative shifting between the two parts 410a, 410b with the two rows of spring elements (421), (422) enables the flexible ring (100) to be flexibly and stretchably moved as per the environment.

10. The device (100) as claimed in claim 9, wherein the spring elements (421), (422) are flexible spring sheet type.

11. The device (100) as claimed in claim 7, wherein the plurality of the spring elements (520), (522) is adapted to be arranged along the central elongated body (510) in at least two rows enabling the flexible ring (100) to be flexibly and stretchably moved.

12. The device (100) as claimed in claim 11, wherein the plurality of spring elements (520) is one of a cylindrical spring type or a sinusoidal spring type.

13. The device (100) as claimed in any of the preceding claims, further comprising at least a power source (150) configured to power the device (100) to be moved in the environment.

14. The device (100) as claimed in any of the preceding claims, further comprising electronic modules configured to facilitate operating of the device (100) in the environment, wherein the electronic modules are at least one of sensing member, visualizing member and Light Emitting Diodes.

## Patentansprüche

1. Strukturanpassbare Bewegungsvorrichtung (100) für eine Umgebung, einschließlich, jedoch nicht darauf beschränkt, einer Umgebung mit wechselnden Geometrien, wobei die Vorrichtung (100) Folgendes umfasst:
mindestens einen flexiblen Ring (110), der an die wechselnden Geometrien der Umgebung anpassbar ist; und
mindestens einen an dem flexiblen Ring (110) angeordneten Antriebsmechanismus (120), der dazu dient, den flexiblen Ring (110) in der Umgebung mit wechselnden Geometrien omnidirektional zu bewegen;
wobei die Vorrichtung **dadurch gekennzeichnet ist, dass** der Antriebsmechanismus (120) mindestens ein an dem flexiblen Ring (110) angeordnetes Antriebselement (130) ist, das sich so von einer inneren Umfangsseite (112) zu einer äußeren Umfangsseite (114) des flexiblen Rings (110) erstreckt, dass ein sich von der äußeren Umfangsseite (114) erstreckendes Teil (132) des Antriebselements (130) auf die wechselnden Geometrien der Umgebung abgestimmt ist, um die Vorrichtung (100) omnidirektional zu bewegen.

2. Vorrichtung (100) nach Anspruch 1, wobei das Antriebselement (130) in der Lage ist, die Differentialbewegung des flexiblen Rings (110) zu ermöglichen, indem der Antriebsmotor (130) eines Bereichs des flexiblen Rings (110) selektiv angetrieben wird, so dass dieser Bereich des flexiblen Rings (110) gesteuert wird, während der Antriebsmotor (130) eines anderen Bereichs des flexiblen Rings (110) begrenzt wird, so dass dieser andere Bereich gleichzeitig begrenzt wird, wodurch die Differentialbewegung der Vorrichtung (100) ermöglicht wird.

3. Vorrichtung (100) nach Anspruch 1, wobei das eine oder die mehreren Antriebselemente (130) ermöglichen können, dass der flexible Ring (110) vertikal, horizontal, vor und zurück oder nebeneinander bewegt wird, indem dessen Bewegung selektiv gewählt wird, um den flexiblen Ring (110) omnidirektional zu bewegen.

4. Vorrichtung (100) nach Anspruch 1, wobei die Antriebselemente (130) motorisierte Mecanum-Räder, omnidirektionale motorisierte Räder, Kugelmotoren, omnidirektionale Tretmechanismen oder dergleichen sind.

5. Vorrichtung (100) nach Anspruch 1, die zudem einen oder mehrere, an dem flexiblen Ring (110) angeordnete Vorspannmechanismen (140) umfasst, um zu ermöglichen, dass der flexible Ring (110) mittels der Antriebselemente (130) elastisch und dehnbar omnidirektional in der Umgebung bewegt wird.

6. Vorrichtung (100) nach Anspruch 5, wobei es sich bei den Vorspannmechanismen (140) um Schraubenfedern handelt.

7. Vorrichtung (100) nach Anspruch 1, die zudem einen zentralen Antriebsmechanismus (400, 500) für die Vorspannwirkung des flexiblen Rings (110) umfasst, wobei der zentrale Antriebsmechanismus (400, 500) Folgendes umfasst:
einen an dem flexiblen Ring (110) mittig angeordneten länglichen Mittelkörper (410, 510); und
eine Vielzahl von Federelementen (421), (422), (520), (522), die sich zwischen dem länglichen Mittelkörper (410) und einem inneren Umfangsabschnitt des flexiblen Rings (110) erstrecken, um zu ermöglichen, dass der flexible Ring (110) elastisch und dehnbar omnidirektional in der Umgebung bewegt wird.

8. Vorrichtung (100) nach Anspruch 7, wobei die Vielzahl von Federelementen (421, (422) in mindestens zwei Reihen an dem länglichen Mittelkörper (410) angeordnet werden kann, so dass die Vielzahl von Federelementen (421), die in der Gegenrichtung der Vielzahl von Federelementen (422) angeordnet ist, ermöglicht, dass der flexible Ring (110) elastisch und dehnbar bewegt wird.

9. Vorrichtung (100) nach Anspruch 8, wobei der längliche Mittelkörper (410) vertikal in mindestens zwei Teile (410a), (410b) geteilt werden kann, die jeweils eine Reihe der Vielzahl von Federelementen (421, (422) bilden, wobei die relative Verschiebung zwischen den zwei Teilen (410a), (410b) mit den zwei Reihen von Federelementen (421), (422) ermöglicht, dass der flexible Ring (110) elastisch und dehnbar omnidirektional entsprechend der Umgebung bewegt wird.

10. Vorrichtung (100) nach Anspruch 9, wobei die Federelemente (421), (422) elastische Federbleche sind.

11. Vorrichtung (100) nach Anspruch 7, wobei die Vielzahl von Federelementen (520, (522) in mindestens zwei Reihen entlang dem länglichen Mittelkörper (510) angeordnet werden kann, um zu ermöglichen, dass der flexible Ring (110) elastisch und dehnbar bewegt wird.

12. Vorrichtung (100) nach Anspruch11, wobei es sich bei der Vielzahl von Federelementen (520) um zylindrische Federn oder sinusförmige Feder handelt.

13. Vorrichtung (100) nach einem der vorstehenden Ansprüche, wobei die Vorrichtung zudem mindestens eine Stromquelle (150) umfasst, welche die Vorrichtung (100) mit Strom versorgt, um sie in der Umgebung zu bewegen.

14. Vorrichtung (100) nach einem der vorstehenden Ansprüche, wobei die Vorrichtung zudem elektronische Module umfasst, die den Betrieb der Vorrichtung (100) in der Umgebung unterstützen, wobei es sich bei den elektronischen Modulen mindestens um ein Sensorelement, ein Visualisierungselement oder Leuchtdioden handelt.

## Revendications

1. Dispositif mobile adaptable de structure (100) d'un environnement, qui comprend notamment des géométries changeantes, le dispositif (100), comprenant :
au moins un anneau souple (110) adaptable aux géométries changeantes de l'environnement ; et
au moins un mécanisme d'entraînement (120) configuré sur l'anneau souple (110) de façon à déplacer de manière omnidirectionnelle l'anneau souple (100) dans l'environnement qui présente des géométries changeantes ;
le dispositif étant **caractérisé en ce que** le dispositif d'entraînement (120) est au moins un élément d'entraînement (130) qui est configuré sur l'anneau souple (110) et qui s'étend à partir d'un côté circonférentiel intérieur (112) vers un côté circonférentiel extérieur (114) de l'anneau souple (110), de telle sorte qu'une partie (132) de l'élément d'entraînement (130) qui s'étend à partir du côté circonférentiel extérieur (114) se coordonne avec les géométries changeantes de l'environnement de façon à déplacer de manière omnidirectionnelle le dispositif (100).

2. Dispositif (100) selon la revendication 1, dans lequel l'élément d'entraînement (130) est capable de permettre un déplacement différentiel de l'anneau souple (100) en entraînant de manière sélective le moteur d'entraînement (130) d'une section de l'anneau souple (100) de façon à diriger ladite section de l'anneau souple (100) tout en limitant le moteur d'entraînement (130) d'une autre section de l'anneau souple (100) de façon à limiter ladite autre section de celui-ci de manière simultanée, en permettant de ce fait le déplacement différentiel du dispositif (100).

3. Dispositif (100) selon la revendication 1, dans lequel le ou les éléments d'entraînement (130) sont capables de permettre des déplacements verticaux, ou horizontaux, ou d'avant en arrière, ou côte à côte de l'anneau souple (100), en sélectionnant de manière sélective leur déplacement de façon à déplacer de manière omnidirectionnelle l'anneau souple (100).

4. Dispositif (100) selon la revendication 1, dans lequel les éléments d'entraînement (130) sont des roues motorisées Mecanum, des roues motorisées omnidirectionnelles, des moteurs sphériques, des mécanismes de marche omnidirectionnels, et similaires.

5. Dispositif (100) selon la revendication 1, comprenant en outre un ou plusieurs agencements de sollicitation (140) configurés sur le ou les anneaux souples (110) de façon à permettre à l'anneau souple (110) de se déplacer de manière omnidirectionnelle avec souplesse et en s'étirant dans l'environnement, par l'intermédiaire des éléments d'entraînement (130).

6. Dispositif (100) selon la revendication 5, dans lequel les éléments de sollicitation (140) sont du type ressort hélicoïdal.

7. Dispositif (100) selon la revendication 1, comprenant en outre un agencement centralisé (400), (500) destiné à solliciter l'effet de l'anneau souple (110), l'agencement d'entraînement centralisé (400), (500) comprenant :
un corps allongé central (410), (510) disposé de manière centrale par rapport à l'anneau souple (110) ; et
une pluralité d'éléments ressorts (421), (422), (520), (522) qui s'étendent entre le corps allongé central (410) et une partie circonférentielle intérieure de l'anneau souple (110) de façon à permettre à l'anneau souple (110) de se déplacer avec souplesse et en s'étirant de manière omnidirectionnelle dans l'environnement.

8. Dispositif (100) selon la revendication 7, dans lequel la pluralité d'éléments ressorts (421), (422) sont adaptés de façon à être agencés en deux rangées au moins sur le corps allongé central (410), de telle sorte que la pluralité d'éléments ressorts (421) agencés dans la direction opposée à la pluralité d'éléments ressorts (422) permettent à l'anneau souple (100) de se déplacer avec souplesse et en s'étirant.

9. Dispositif (100) selon la revendication 8, dans lequel le corps allongé central (410) est adapté de façon à se scinder de manière verticale en au moins deux parties (410a), (410b), chacune d'elles configurant une rangée de la pluralité d'éléments ressorts (421), (422), dans lequel un décalage relatif entre les deux parties (410a), (410b) avec les deux rangées d'éléments ressorts (421), (422), permet à l'anneau souple (100) de se déplacer avec souplesse et en s'étirant selon l'environnement.

10. Dispositif (100) selon la revendication 9, dans lequel les éléments ressorts (421), (422), sont du type ressort en feuillard souple.

11. Dispositif (100) selon la revendication 7, dans lequel la pluralité d'éléments ressorts (520), (522) sont adaptés de façon à être agencés le long du corps allongé central (510) en deux rangées au moins, ce qui permet à l'anneau souple (100) de se déplacer avec souplesse et en s'étirant.

12. Dispositif (100) selon la revendication 11, dans lequel la pluralité d'éléments ressorts (520) sont du type ressort cylindrique ou du type ressort sinusoïdal.

13. Dispositif (100) selon l'une quelconque des revendications précédentes, comprenant en outre au moins une source d'alimentation (150) configurée de façon à alimenter le dispositif (100) à être déplacé dans l'environnement.

14. Dispositif (100) selon l'une quelconque des revendications précédentes, comprenant en outre des modules électroniques configurés de façon à faciliter le fonctionnement du dispositif (100) dans l'environnement, dans lequel les modules électroniques sont au moins l'un d'un élément de détection, d'un élément de visualisation et de diodes électroluminescentes.
